# EUROPÄISCHE PATENTSCHRIFT

(11) **EP 2 083 310 B1**
(45) Veröffentlichungstag und Bekanntmachung des Hinweises auf die Patenterteilung: **30.08.2017**
(21) Anmeldenummer: 09000396.3
(22) Anmeldetag: 14.01.2009
(51) Int. Cl.: G02B 27/01, G02B 6/00, G02B 5/18

(54) **Optisches Anzeigegerät**
Optical display device
Appareil d'affichage optique

(30) Priorität: 24.01.2008 DE 102008005817
(43) Veröffentlichungstag der Anmeldung: 29.07.2009
(73) Patentinhaber: Carl Zeiss AG, 73447 Oberkochen (DE)
(72) Erfinder: Kleemann, Bernd, 73434 Aalen (DE)
(74) Vertreter: Ostertag & Partner Patentanwälte mbB

(56) Entgegenhaltungen:
- WO-A1-2004/025335
- US-B2- 6 805 490

## Beschreibung

### HINTERGRUND DER ERFINDUNG

### 1. Gebiet der Erfindung

Die Erfindung betrifft ein optisches Anzeigegerät, das insbesondere zur Verwendung in einem Head-up Display oder einem Head-mounted Display, wie sie beispielsweise aus der Unterhaltungselektronik bekannt sind, geeignet ist, um mittels diffraktiver Elemente die Austrittspupille eines bilderzeugenden Systems zu vergrößern.

### 2. Beschreibung des Standes der Technik

Im Bereich der Mensch-Maschinen-Schnittstellen werden derzeit vermehrt Prinzipien und Vorrichtungen erarbeitet, mit denen sich rechnergestützte Informationen der realen Erfahrungswelt des Menschen überlagern lassen. Ein Beispiel hierfür sind die so genannten Augmented oder Virtual Reality Displays (VRD). Solche Displays, die beispielsweise ähnlich einer Brille als Head-mounted Displays (HMD) ausgeführt sein können, überlagern das Bild eines bilderzeugenden Systems, beispielsweise eines Mikrodisplays, mit dem Blick des Betrachters auf die reale Welt.

Ein solches Head-mounted Display kann beispielsweise dadurch realisiert werden, dass das Licht eines bilderzeugenden Systems auf einen planaren transparenten Lichtleiter gerichtet und über ein Beugungsgitter, dem so genannten Einkoppelgitter, in den Lichtleiter eingekoppelt wird. Das Licht läuft dann entlang des Lichtleiters zu einem so genannten Auskoppelgitter, mit dem das Licht in Richtung des Auges wieder ausgekoppelt wird. Da es sich um einen transparenten Lichtleiter handelt, überlagert sich dabei das ausgekoppelte Licht mit demjenigen Licht, das von der realen Welt auf die dem Auge gegenüberliegenden Seite des Lichtleiters trifft, und wird somit gemeinsam mit diesem im Auge des Betrachters auf die Netzhaut fokussiert. Über die Gitter, die auch holographische optische Elemente (HOEs) genannt werden, wird dabei außerdem die Austrittspupille des Mikrodisplays vergrößert und an den Sichtbereich des Auges angepasst. Ferner können planare Lichtleiter und die Gitter binokular oder monokular ausgeführt sein, je nach dem, ob das Einkoppelgitter zweigeteilt und ein zweites Auskoppelgitter vorgesehen ist oder nicht.

Derartige Planplatten-HMDs sind beispielsweise aus der US 6 805 490 B2 bekannt, die zeigt, wie ein solches Planplatten-HMD aus mehreren Schichten oder mehreren Teilplatten so hergestellt werden kann, dass Licht mit unterschiedlicher Wellenlänge verwendeten werden kann.

Da das Licht des bilderzeugenden Systems senkrecht auf eine der flachen Seiten des Lichtleiters fällt, muss es, um in den planaren Lichtleiter des HMDs eingekoppelt zu werden, an den Gittern so stark abgelenkt werden, dass der Winkel des Lichts zu den Grenzflächen des planaren Lichtleiters größer ist als der Winkel der Totalreflexion. Gleiches gilt entsprechend im umgekehrten Fall des Auskoppelns.

Um möglichst viel Licht in eine bestimmte Beugungsordnung zu leiten, werden normalerweise so genannte Blazegitter verwendet, die ein sägezahnförmiges Profil aufweisen und durch eine geeignete Parameterwahl durch die Kombination von Brechungs- und Beugungseffekt einen Großteil des Lichts in einer Beugungsordnung konzentrieren. Eine charakteristische Größe solcher Blazegitter ist die Beugungseffizienz, d.h. welcher Anteil des Lichts in die gewählte Ordnung geleitet wird. Damit eine akzeptable Lichtausbeute der meist als mobile Geräte ausgeführten HMDs gewährleistet ist, müssen die zur Ein- und Auskopplung verwendeten Gitter allerdings eine sehr hohe Beugungseffizienz erreichen.

Aus Fertigungsgründen sind die in HMDs verwendeten Gitter meist Oberflächengitter, deren Beugungseffizienz wesentlich von der Profilform des Gitters abhängt. Klassische Blazegitter sind dabei aufgrund von Abschattungseffekten, die bei den zur Erreichung der starken Ablenkung notwendigen kleinen Gitterweiten auftreten, zur Anwendung bei Planplatten-HMDs ungeeignet. Auch binäre Gitter, die eine Ein- und Auskoppeleffizienz von bestenfalls 30 Prozent haben, sind keine optimale Lösung. Daher werden bisher so genannte Schräggitter eingesetzt, die jedoch relativ aufwändig in der Herstellung sind.

### ZUSAMMENFASSUNG DER ERFINDUNG

Aufgabe der Erfindung ist daher, ein derartiges optisches Anzeigegerät anzugeben, bei dem das Licht sowohl mit möglichst hoher Beugungseffizienz mit dem Einkoppelgitter in die Planplatte des Lichtleiters einkoppelbar als auch möglichst effizient und homogen mit dem Auskoppelgitter wieder auskoppelbar ist. Das optische Anzeigegerät soll zudem einfach und kostengünstig herstellbar sein.

Gelöst wird diese Aufgabe erfindungsgemäß durch ein optisches Anzeigegerät mit den Merkmalen des Anspruchs 1. Weitere vorteilhafte Ausgestaltungen der Erfindung ergeben sich dabei aus den abhängigen Ansprüchen 2 bis 6.

Da die in den Ansprüchen angegebenen, im Folgenden als BLACES-Gitter bezeichneten Gitter über einen großen Einfallsbereich eine Beugungseffizienz zwischen 65% und 75% aufweisen, sind diese sehr gut zum Einkoppeln von Licht in eine Planplatte geeignet. Besonders vorteilhaft ist dabei, dass die BLACES-Gitter im Vergleich zu Schräggittern sehr einfach hergestellt werden können.

So ist beispielsweise eine Herstellung denkbar, bei der mittels Elektronenstrahllithographie oder einer anderen geeigneten Technologie für jeden auf dem planaren Lichtleiter benötigten Gittertyp ein Template aus Quarzglas generiert wird. Ein solches Template kann derzeit in einer Größe von bis zu 25 x 25 mm² gefertigt werden, was für die Ein- und Auskoppelgitter der HMDs ausreichend ist. In einem nächsten Schritt wird dann über eine NanoImprint-Technologie die Struktur des Gitters als flüssiger Lack mit dem Template ähnlich eines klassischen Hochdrucks auf den Lichtleiter gedruckt. Nach einer UV-Härtung wird dann das Template senkrecht nach oben abgezogen. Bei entsprechender Fertigung kann ein solches Template für 10.000 bis 25.000 solcher Replikationen verwendet werden, in den meisten Fällen sogar nach einer entsprechenden Reinigung in einem weiteren derartigen Zyklus. Insbesondere im Hinblick auf die Anwendung von HMDs im Unterhaltungselektronikbereich ist die dadurch erreichbare Senkung der Produktionskosten von großer Bedeutung.

Eine andere Möglichkeit der Herstellung eines solchen BLACES-Gitters ist die direkte photolithographische Übertragung einer Maske auf das Substrat. Damit könnten, wenn die Profiltiefe aller Gitter die gleiche ist, alle Gitter in einem einzigen Arbeitsschritt auf den planaren Lichtleiter des HMDs übertragen werden.

### KURZE BESCHREIBUNG DER ZEICHUNGEN

Weitere Merkmale und Vorteile der Erfindung ergeben sich aus der nachfolgenden Beschreibung von Ausführungsbeispielen anhand der Zeichnungen. Darin zeigen:
- Figur 1: eine schematische Vorderansicht eines auf einer Planplatte basierenden Head-mounted Displays;
- Figur 2: eine schematische Aufsicht des zentralen Teils eines BLACES-Gitters zum Einkoppeln von Licht in die Planplatte;
- Figur 3: eine schematische Draufsicht auf ein BLACES-Gitter, das zum homogenen Auskoppeln von Licht aus der Planplatte geeignet ist.

### BESCHREIBUNG BEVORZUGTER AUSFÜHRUNGSBEISPIELE

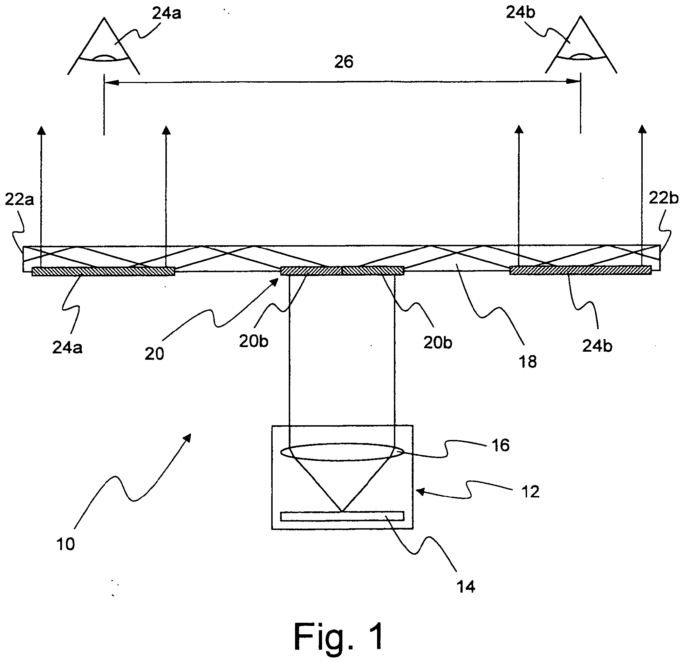

Die Figur 1 zeigt in einer stark schematisierten Darstellung ein optisches Anzeigegerät 10, das beispielsweise in sogenannten Head-mounted oder Head-up Displays verwendet werden kann. Das optische Anzeigegerät 10 weist ein Mikrodisplay 12 auf, das das Bild eines bilderzeugenden Systems 14 über eine Optik 16 auf die Mitte einer flachen Seite einer im Wesentlichen planparallelen Platte 18 richtet. Das bilderzeugende System 14 kann dabei beispielsweise durch eine Flüssigkristallanzeige (LCD) oder durch Anordnungen von Leuchtdioden (LEDs) oder organischen Leuchtdioden (OLEDs) gegeben sein, wie sie insbesondere aus dem Bereich der Unterhaltungselektronik bekannt sind.

Das von dem bilderzeugenden System 14 erzeugte Licht fällt dann auf ein in oder an der planparallelen Platte 18 angebrachtes Gitter 20, das das Licht mittels Beugung längs der planparallele Platte 18 in diese einkoppelt. Die Gitterkonstante g des Gitters 20 wird dabei so gewählt, dass das Licht unter einem Winkel in die planparallele Platte 18 eingekoppelt wird, der größer ist als der Winkel der Totalreflexion an der Grenzschicht zwischen der planparallelen Platte 18 und dem diese umgebenden Medium. Dadurch verhält sich die planparallele Platte 18 wie ein Lichtleiter, in dem das Licht zwischen den beiden gegenüberliegenden Oberflächen der planparallelen Platte 18 hin und her gespiegelt wird.

Da es sich bei dem Gitter 20 um ein Gitter handelt, das eine Blazewirkung zeigt, d. h. eine bestimmte Beugungsordnung mit einer bestimmten, möglichsten hohen Beugungseffizienz bevorzugt, und das Gitter 20 in einen linken Gitterteilbereich 20a und einen rechten Gitterteilbereich 20b mit gegensätzlicher Blazewirkung unterteilt ist, wird das von dem bilderzeugenden System 14 kommende Licht jeweils hälftig links und rechts entlang der planparallelen Platte 18 geleitet.

Das zu den Enden 22a und 22b der planparallelen Platte 18 laufende Licht wird dann von einem linken und einem rechten Auskoppelgitter 24a bzw. 24b, die im Augenabstand 26 an der planparallelen Platte 18 angeordnet sind, aus dieser in Richtung des linken und des rechten Auges 26a bzw. 26b ausgekoppelt. Die Optik 16 in Verbindung mit den Ein- und Auskoppelgittern 20a, 20b, 24a, 24b erzeugt dabei ein virtuelles Bild des auf dem bilderzeugenden Systems 14 dargestellten Gegenstands, das von den beiden Augen 26a, 26b als reales Bild auf die Netzhaut abgebildet wird. Durch zusätzliche optische Elemente oder zusätzliche sogenannte Expandergitter, die zwischen den Ein- und Auskoppelgittern 20a, 20b, 24a, 24b angeordnet sein können, kann dabei die Austrittspupille des optischen Anzeigegeräts 10 weiter vergrößert werden.

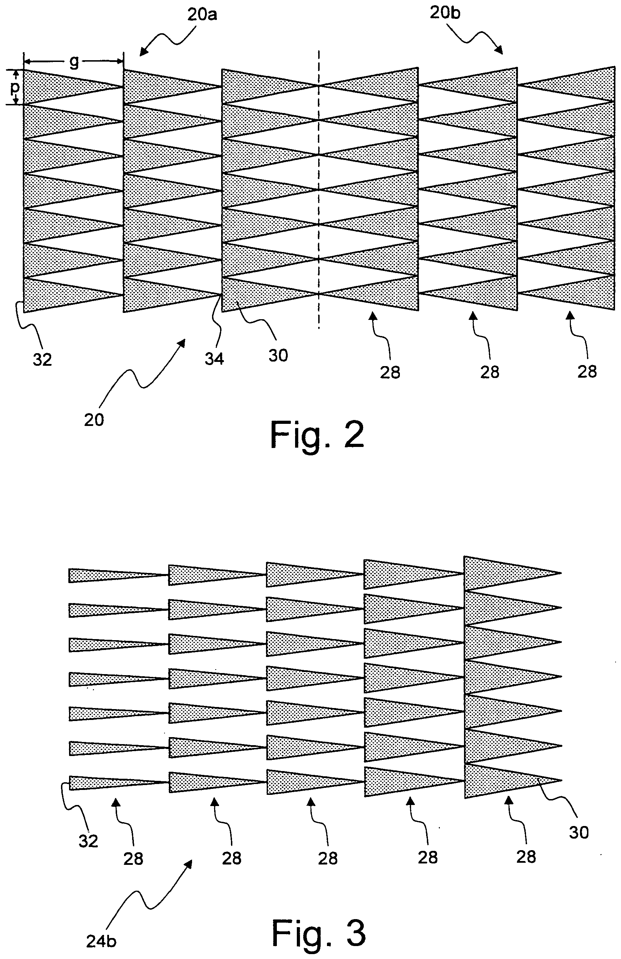

Die Figur 2 zeigt eine vereinfachte Darstellung eines zentralen Ausschnitts des Einkoppelgitters 20. Bei dem gezeigten Gitter 20 handelt es sich um ein sogenanntes "Blazed Area-Coded Effective medium Structures" oder BLACES-Gitter, wie dies in der WO 2004/02 5335 A1 beschrieben ist. Ein derart geblazetes Gitter weist eine Vielzahl parallel und geradlinig verlaufender Beugungsstruktur 28 auf, von denen in der Zeichnung jeweils drei für die beiden entgegengesetzt wirkenden Gitterteilbereiche 20a und 20b ausschnittsweise dargestellt sind. Die Beugungsstrukturen 28 haben senkrecht zu ihrer Erstreckungsrichtung eine Breite g. Da die Beugungsstrukturen 28 des gezeigten Ausführungsbeispiels unmittelbar aneinander stoßen, entspricht diese Breite g der klassischen Gitterkonstanten eines Gitters. Wie von klassischen optischen Gittern bekannt, muss die Gitterkonstanten g in der Größenordnung der effektiven Wellenlänge λ des Lichts sein, für die das optische Gitter verwendet wird, damit die Beugungseffekte in Erscheinung treten.

Ferner muss die Gitterkonstante g stets größer sein als die effektive Wellenlänge λ des Lichts, da das Licht Strukturen die kleiner sind als seine Wellenlänge nicht mehr als Strukturierung wahrnimmt. Je nach Füllfaktor zwischen Strukturen und Umgebung wirken solche Strukturen im Subwellenlängenbereich nämlich im wesentlichen gleich wie ein homogenes optisches Material, das einen effektiven Brechungsindex hat, der sich in Abhängigkeit des Füllfaktors als Mischwert zwischen den Brechungsindizes der Strukturen und der Umgebung ergibt. Wie im Folgenden klar werden wird, machen sich die BLACES-Gitter genau diesen Effekt zu Eigen.

Jede Beugungsstruktur 28 setzt sich daher ihrerseits aus einer Vielzahl von unmittelbar aneinandergesetzten Einzel-Substrukturen 30 zusammen, die jeweils die Gestalt eines Prismas mit einer dreieckigen Grundfläche und einer Höhe h haben. Wie aus der Figur 2 ersichtlich, hat eine solche Grundfläche einer Einzel-Substruktur 30 die Form eines gleichschenkligen Dreiecks, dessen Grundseite 32 mit benachbarten Einzel-Substrukturen 30 eine durchgehende Linie bildet. Die Länge p einer solchen Grundseite 32 ist dabei kleiner als die effektive Wellenlänge λ des verwendeten Lichts. Die Spitze 34 des Dreiecks, an der der kleinste Winkel eingeschlossen wird, stößt an der Grundseite 32 der Grundfläche einer Einzel-Substruktur 30 der benachbarten Beugungsstruktur 28 an.

Auf diese Weise ergeben sich Beugungsstrukturen 28, die auf der einen Seite durch eine ebene vertikale Fläche und auf der anderen Seite durch eine kammförmige Lateralstruktur begrenzt sind. Die beiden Gitterteilbereiche 20a und 20b unterscheiden sich dabei durch eine gegensätzliche Ausrichtung der kammförmigen Lateralstruktur der Beugungsstrukturen 28.

Da alle Abmessungen der Einzel-Substrukturen 30 entlang der Erstreckungsrichtung der Beugungsstrukturen 28 kleiner als die Länge p der Grundseite 32 sind und diese wiederum kleiner als die effektive Wellenlänge λ des verwendeten Lichts ist, nimmt das Licht die aus einzelnen Prismen zusammengesetzte kammförmige Lateralstruktur der Beugungsstrukturen 28 als ein senkrecht zu den Beugungsstrukturen 28 sägezahnförmig variierendes Brechungsindexprofil war. Damit entspricht die Wirkung eines solchen Gitters 20 der eines klassischen Blazegitters, das durch eine geeignete Abstimmung des sägezahnförmigen Brechungsindexprofils, der Gitterkonstanten g und der Wellenlänge λ die Beugung in eine ausgewählte Beugungsordnung bevorzugt. Durch das Verändern der Form der Lateralstruktur, d.h. der Grundfläche der Einzel-Substrukturen 30, kann ein Fachmann zudem ohne weiteres die Beugungseffizienz und andere Charakteristika des Gitters 20 je nach den jeweiligen Anforderung der Anwendung beeinflussen.

So wird beispielweise bei der Auskopplung des Lichts eine homogene Intensität des ausgekoppelten Lichts entlang der planparallelen Platte 18 gewünscht, da dieses Licht direkt in das Auge 26a, 26b abgegeben wird. Da das an den Grenzflächen der planparallelen Platte 18 reflektierte Licht entlang dieser mehrfach auf die Auskoppelgitter 24a, 24b trifft und die Intensität nach jeder einzelnen Auskopplung, die durch Beugung bewirkt wird, entlang der planparallelen Platte 18 abnimmt, müssen die Auskoppelgitter 24a, 24b eine solche Anordnung aufweisen, dass die Auskoppeleffizienz mit zunehmendem Abstand vom Einkoppelgitter 20 zunimmt. Dabei muss die Gitterkonstante g jedoch konstant bleiben, um die Beugung in Richtung der Augen 26a, 26b beizubehalten.

Ein Ausschnitt aus einem solchen Auskoppelgitter 24b für das rechte Auge 26b ist in einer Draufsicht in der Figur 3 dargestellt. Bei diesem Auskoppelgitter 24b nimmt die Grundseite 32 des gleichschenkligen Dreiecks, das die Grundfläche der Prismen der Einzel-Substrukturen 30 bildet, in der Zeichnung von rechts nach links, d. h. zur Mitte der planparallelen Platte 18 hin, stetig ab, so dass die Einzel-Substrukturen 30 der weiter links liegenden Beugungsstrukturen 28 entlang der Erstreckungsrichtung der Beugungsstrukturen 28 immer weiter von einander beabstandet sind. Dadurch nimmt der maximale Füllfaktor der Beugungsstrukturen 28 von rechts nach links ab. Die weiter rechts liegenden Beugungsstrukturen 28 weisen somit eine steilere Blazeflanke auf als die weiter links liegenden. Bei geeigneter Auslegung der Parameter durch einen Fachmann kann damit die Beugüngseffizienz des Gitter variiert und über die gesamte Breite des Auskoppelgitters 24b hinweg eine gleichmäßige Intensität des ausgekoppelten Lichts erreicht werden.

Ein hierzu äquivalentes Auskoppelgitter 24b könnte beispielsweise auch unterschiedlich hohe Prismen als Einzel-Substrukturen 30 aufweisen. Aus Herstellungsgründen ist die vorherige Anordnung jedoch zu bevorzugen, da diese mit nur einer Beschichtung in einem Prozesszyklus herstellbar ist.

## Patentansprüche

1. Optisches Anzeigegerät, insbesondere zur Verwendung in einem Head-up Display oder einem Head-mounted Display, das
a) einen im Wesentlichen ebenen Lichtleiter (18),
b) ein bilderzeugendes System (12), das Licht mit einer Wellenlänge erzeugt,
c) ein erstes Beugungsgitter (20, 20a, 20b), mit dem Licht, das von dem bilderzeugenden System (12) kommt, in den Lichtleiter (18) einkoppelbar ist, und
d) ein zweites Beugungsgitter (24a, 24b) aufweist, mit dem das Licht wieder aus dem Lichtleiter (18) auskoppelbar ist,
**dadurch gekennzeichnet, dass**
e) mindestens eines der beiden Beugungsgitter (20, 20a, 20b, 24a, 24b) ein binär geblazetes Gitter mit einer Vielzahl von Beugungsstrukturen (28) ist, die
- sich im Wesentlichen parallel zueinander erstrecken und
- senkrecht zu ihrer Erstreckungsrichtung eine Breite g aufweisen, die größer als die Wellenlänge des von dem bilderzeugenden System (12) kommenden Lichts ist, und die
- sich aus einer Vielzahl von Einzel-Substrukturen (30) zusammensetzen, die für eine Blazewirkung sorgen und die in der Erstreckungsrichtung der Beugungsstrukturen (28) eine maximale Abmessung p aufweist, die zumindest über eine Beugungsstruktur (28) gemittelt kleiner als die Wellenlänge des von dem bilderzeugenden System (12) kommenden Lichts ist,
wobei die Beugungsstrukturen (28) jeweils eine Reihe von Einzel-Substrukturen (30) entlang einer Erstreckungsrichtung umfassen, die in der Draufsicht die Form einer geschlossenen geometrischen Fläche besitzen, deren parallel zur Erstreckungsrichtung der Beugungsstrukturen (28) gerichtete Abmessung in Richtung senkrecht zur Erstreckungsrichtung der Beugungsstrukturen (28) variiert und die in Richtung senkrecht zur Erstreckungsrichtung der Beugungsstrukturen (28) eine maximale Abmessung besitzt, die größer als die Wellenlänge des von dem bilderzeugenden System (12) kommenden Lichts ist.

2. Optisches Anzeigegerät nach Anspruch 1, **dadurch gekennzeichnet, dass** die Einzel-Substrukturen (30) von einer Beugungsstruktur (28) zu einer anderen Beugungsstruktur (28) derart variieren, dass deren Form, deren maximale Abmessung p in Erstreckungsrichtung der Beugungsstrukturen (28) und/oder deren Abstand entlang der Erstreckungsrichtung der Beugungsstrukturen (28) variiert.

3. Optische Anzeigegerät nach Anspruch 2, **dadurch gekennzeichnet, dass** zwischen der einen und der anderen Beugungsstruktur (28) die maximale Abmessung p der Einzel-Substrukturen (30) in Erstreckungsrichtung der Beugungsstrukturen (28) in dem Maße abnimmt, wie deren Abstand entlang der Erstreckungsrichtung der Beugungsstrukturen (28) zunimmt.

4. Optisches Anzeigegerät nach einem der vorhergehenden Ansprüche, **dadurch gekennzeichnet, dass** die Einzel-Substrukturen (30) von einer Beugungsstruktur (28) zu einer anderen unterschiedliche Profiltiefen aufweisen.

5. Optisches Anzeigegerät nach einem der vorhergehenden Ansprüche, **dadurch gekennzeichnet, dass** die Einzel-Substrukturen (30), aus welchen sich die Beugungsstrukturen (28) zusammensetzen, alle dieselbe Höhe h aufweisen.

6. Head-mounted Display mit einem optischen Anzeigegerät nach einem der vorhergehenden Ansprüche.

## Claims

1. Optical display device, in particular for use in a head-up display or a head-mounted display, having
a) a substantially planar optical waveguide (18),
b) an imaging system (12) which generates light having a wavelength,
c) a first diffraction grating (20, 20a, 20b), with which light coming from the imaging system (12) is able to be coupled into the optical waveguide (18), and
d) a second diffraction grating (24a, 24b), with which the light is able to be coupled out of the optical waveguide (18),
**characterized in that**
e) at least one of the two diffraction gratings (20, 20a, 20b, 24a, 24b) is a binary blazed grating having a multiplicity of diffraction structures (28), which
- extend substantially parallel with respect to one another, and
- have, perpendicular to their direction of extent, a width g, which is greater than the wavelength of the light coming from the imaging system (12), and which
- are made up of a multiplicity of individual substructures (30), which bring about a blazing action and have, in the direction of extent of the diffraction structures (28), a maximum dimension p, which is, at least averaged over a diffraction structure (28), smaller than the wavelength of the light coming from the imaging system (12),
wherein the diffraction structures (28) comprise in each case one row of individual substructures (30) along a direction of extent, which have, in top view, the form of a closed geometric area, the dimension of which, in the direction parallel to the direction of extent of the diffraction structures (28), varies in the direction perpendicular to the direction of extent of the diffraction structures (28) and which has, in the direction perpendicular to the direction of extent of the diffraction structures (28), a maximum dimension which is greater than the wavelength of the light coming from the imaging system (12).

2. Optical display device according to Claim 1, **characterized in that** the individual substructures (30) vary from one diffraction structure (28) to another diffraction structure (28) such that the form thereof, their maximum dimension p in the direction of extent of the diffraction structures (28) and/or the spacing between them along the direction of extent of the diffraction structures (28) varies.

3. Optical display device according to Claim 2, **characterized in that**, between the one diffraction structure (28) and the other, the maximum dimension p of the individual substructures (30) in the direction of extent of the diffraction structures (28) decreases to the same extent as their spacing along the direction of extent of the diffraction structures (28) increases.

4. Optical display device according to one of the preceding claims, **characterized in that** the individual substructures (30) have different profile depths from one diffraction structure (28) to another.

5. Optical display device according to one of the preceding claims, **characterized in that** the individual substructures (30), from which the diffraction structures (28) are made up, all have the same height h.

6. Head-mounted display having an optical display device according to one of the preceding claims.

## Revendications

1. Appareil d'affichage optique, notamment destiné à être utilisé dans un affichage tête haute ou un visiocasque, qui possède
a) une fibre optique (18) sensiblement plane,
b) un système générateur d'image (12) qui génère de la lumière ayant une longueur d'onde,
c) un premier réseau de diffraction (20, 20a, 20b) avec lequel la lumière en provenance du système générateur d'image (12) peut être injectée dans la fibre optique (18), et
d) un deuxième faisceau de diffraction (24a, 24b) avec lequel la lumière peut de nouveau être découplée hors de la fibre optique (18),
**caractérisé en ce que**
e) au moins l'un des deux réseaux de diffraction (20, 20a, 20b, 24a, 24b) est un réseau blazé binaire ayant une pluralité de structures de diffraction (28), lesquelles
- s'étendent sensiblement en parallèle les unes des autres et
- possèdent, perpendiculairement à la direction de leur extension, une largeur g qui est supérieure à la longueur d'onde de la lumière en provenance du système générateur d'image (12), et qui
- se composent d'une pluralité de sous-structures (30) individuelles qui contribuent à un effet de blazé et qui présentent, dans la direction de l'extension des structures de diffraction (28), une dimension maximale p dont la moyenne calculée au moins sur une structure de diffraction (28) est inférieure à la longueur d'onde de la lumière en provenance du système générateur d'image (12),
les structures de diffraction (28) comprenant respectivement une rangée de sous-structures (30) individuelles le long d'une direction d'extension qui, vues de dessus, présentent la forme d'une surface géométrique fermée dont la dimension orientée parallèlement à la direction de l'extension des structures de diffraction (28) varie dans la direction perpendiculaire à la direction de l'extension des structures de diffraction (28) et qui présente, dans la direction perpendiculaire à la direction de l'extension des structures de diffraction (28), une dimension maximale qui est supérieure à la longueur d'onde de la lumière en provenance du système générateur d'image (12) .

2. Appareil d'affichage optique selon la revendication 1, **caractérisé en ce que** les sous-structures (30) individuelles d'une structure de diffraction (28) varient par rapport à celles d'une autre structure de diffraction (28) de telle sorte que leur forme, leur dimension maximale p dans la direction de l'extension des structures de diffraction (28) et/ou leur écart le long de la direction de l'extension des structures de diffraction (28) varient.

3. Appareil d'affichage optique selon la revendication 2, **caractérisé en ce qu'**entre l'une et l'autre structure de diffraction (28), la dimension maximale p des sous-structures (30) individuelles dans la direction de l'extension des structures de diffraction (28) diminue de la même proportion que leur écart le long de la direction de l'extension des structures de diffraction (28) augmente.

4. Appareil d'affichage optique selon l'une des revendications précédentes, **caractérisé en ce que** les sous-structures (30) individuelles présentent des profondeurs de profilé différentes d'une structure de diffraction (28) à l'autre.

5. Appareil d'affichage optique selon l'une des revendications précédentes, **caractérisé en ce que** les sous-structures (30) individuelles desquelles sont constituées les structures de diffraction (28) présentent toutes la même hauteur h.

6. Affichage tête haute équipé d'un appareil d'affichage optique selon l'une des revendications précédentes.
